# EUROPÄISCHE PATENTSCHRIFT

(11) **EP 3 538 396 B1**
(45) Veröffentlichungstag und Bekanntmachung des Hinweises auf die Patenterteilung: **13.05.2020**
(21) Anmeldenummer: 17767840.6
(22) Anmeldetag: 15.09.2017
(51) Int. Cl.: H02J 7/02, H02J 50/10, H02J 50/12, H02J 50/00, H02J 50/40, B60L 53/12, B60L 55/00, H02J 3/40, H02J 7/00

(54) **LADESTATION, ELEKTROFAHRZEUG SOWIE SYSTEM MIT EINER LADESTATION UND EINEM ELEKTROFAHRZEUG**
CHARGING STATION, ELECTRIC VEHICLE AND SYSTEM HAVING A CHARGING STATION AND AN ELECTRIC VEHICLE
STATION DE CHARGE, VÉHICULE ÉLECTRIQUE ET SYSTÈME COMPRENANT UNE STATION DE CHARGE ET UN VÉHICULE ÉLECTRIQUE

(30) Priorität: 11.11.2016 DE 102016121628
(43) Veröffentlichungstag der Anmeldung: 18.09.2019
(73) Patentinhaber: Innogy SE, 45128 Essen (DE)
(72) Erfinder: WAFFNER, Jürgen, 45307 Essen (DE); VOIT, Stephan, 44892 Bochum (DE)
(74) Vertreter: Cohausz & Florack
(86) Internationale Anmeldenummer: PCT/EP2017/073294
(87) Internationale Veröffentlichungsnummer: WO 2018/086788

(56) Entgegenhaltungen:
- EP-A1- 2 760 109
- US-A1- 2011 202 192

## Beschreibung

Der Gegenstand betrifft eine Ladestation für Elektrofahrzeuge, ein Elektrofahrzeug sowie ein entsprechendes System.

Ladestationen für Elektrofahrzeuge als auch Elektrofahrzeuge sind hinlänglich bekannt. Elektrofahrzeuge im Sinne des Gegenstandes können beispielsweise Personenkraftwagen (PKW) oder Lastkraftwagen (LKW) sein, die mit einem elektrischen Energiespeicher ausgestattet sind und über einen Elektromotor zumindest teilweise angetrieben werden. Auch können elektrisch betriebene Zweiräder Elektrofahrzeuge im Sinne des Gegenstandes sein. Allen Elektrofahrzeugen gemein ist, dass sie über einen internen Energiespeicher zur Energieversorgung des elektrischen Antriebsmotors verfügen. Da mit Hilfe des Energiespeichers der Antriebsmotor betrieben wird, ist dieser in der Regel ausreichend groß dimensioniert, beispielsweise verfügt er über eine Speicherkapazität von 5 kWh, 20 kWh oder sogar 100 kWh und mehr. Es ist erkannt worden, dass die Energiespeicher auch zur Netzstabilisierung oder als Zwischenspeicher von privaten elektrischen Erzeugungsanlagen genutzt werden können. In diesem Fall ist es notwendig, die elektrische Energie aus dem Energiespeicher in das elektrische Energieversorgungsnetz zurückspeisen zu können.

Neben dem Anschluss der Elektrofahrzeuge über ein Ladekabel ist es auch möglich, Elektrofahrzeuge elektrisch mit einer Ladestation mittels elektromagnetischer Kopplung, insbesondere Induktion, zu koppeln. Hierzu ist sowohl im Elektrofahrzeug als auch an der Ladestation jeweils eine Induktionsspule angeordnet, die bei korrekter räumlicher Anordnung zueinander magnetisch miteinander gekoppelt sind. Hierdurch lässt sich elektrische Energie zwischen den beiden Spulen austauschen.

Für die Rückspeisung ist es notwendig, dass elektrische Energie aus dem Energiespeicher des Elektrofahrzeugs über die in dem Elektrofahrzeug angeordnete Induktionsspule in die Induktionsspule der Ladestation eingespeist wird. Insbesondere beim Anschluss an das elektrische Energieversorgungsnetz ist jedoch diese Rückkopplung nicht unproblematisch, da die Netzstabilität auch bei der Rückkopplung gewährleistet bleiben muss.

Aus diesem Grunde lag dem Gegenstand die Aufgabe zugrunde, eine Ladestation für Elektrofahrzeuge zur Verfügung zu stellen, bei der eine induktive Rückspeisung aus einem Energiespeicher eines Elektrofahrzeugs netzverträglich erfolgen kann.

Diese Aufgabe wird durch eine Ladestation nach Anspruch 1, ein Elektrofahrzeug nach Anspruch 7 sowie ein System nach Anspruch 11 gelöst.

Es ist erkannt worden, dass bei der Rückspeisung von elektrischer Energie in das elektrische Energieversorgungsnetz die Versorgungsqualität des Versorgungsnetzes nicht beeinträchtigt werden darf. Insbesondere ist die Netzfrequenz des elektrischen Energieversorgungsnetzes stets innerhalb enger Frequenzgrenzen einzuhalten. Um dies zu ermöglichen, ist es notwendig, dass die Rückspeisung aus dem Energiespeicher des Elektrofahrzeugs synchron mit der Netzfrequenz erfolgt. Gegenständlich verfügt die Ladestation über eine Induktionsspule, die zur induktiven Kopplung mit einer Induktionsspule eines Elektrofahrzeugs eingerichtet ist. Eine solche Induktionsspule kann in oder an der Ladestation angeordnet sein, beispielsweise bodenseitig, im Bereich einer Bordsteinkante, an dem Gehäuse der Ladestation oder sonst in der Nähe der Ladestation.

Vorzugsweise ist die Induktionsspule der Ladestation exklusiv für die Rückspeisung aus einem Energiespeicher eines Elektrofahrzeugs eingerichtet und wird nicht dazu verwendet, elektrische Energie aus dem Energieversorgungsnetz induktiv in das Elektrofahrzeug zu speisen. Daher ist die Induktionsspule vorzugsweise derart, dass elektrische Leistung lediglich von der Induktionsspule in Richtung des Energieversorgungsnetzes fließt, nicht jedoch aus dem elektrischen Energieversorgungsnetz in die Induktionsspule. Hierfür können geeignete schaltungstechnische Maßnahmen, wie beispielsweise Dioden zum Einsatz kommen.

Die Ladestation ist darüber hinaus über einen Netzanschlusspunkt mit einem elektrischen Energieversorgungsnetz verbunden. Ein Netzanschlusspunkt ist vorzugsweise ein ein oder dreiphasiger Anschlusspunkt an vorzugsweise einem Niederspannungs- oder Mittelspannungsnetz. Über den Netzanschluss ist die Induktionsspule zumindest unter Zwischenschaltung zumindest eines Leistungsschutzschalters, eines Fehlerstromschutzschalters und/oder einer Steuerelektronik verbunden.

Ein Messzähler ist ebenfalls in der gegenständlichen Ladestation angeordnet. Der Messzähler ist dazu eingerichtet, einen elektrischen Leistungsfluss von der Induktionsspule zum Netzanschlusspunkt zu messen. Hierzu eignen sich insbesondere sogenannte Smart Meter, die über eine Messung zumindest des Stroms und der Spannung eine elektrische Leistung erfassen können. Darüber hinaus können auch eine Phasenlage, eine Netzfrequenz sowie weitere relevante elektrische Größen in dem Messzähler erfasst werden.

Schließlich ist in der Ladestation ein Prozessor angeordnet, der entweder in dem Messzähler integriert sein kann oder als Teil der Ladeelektronik auch außerhalb des Messzählers angeordnet sein kann.

Zur netzsynchronen Rückspeisung aus dem Energiespeicher des Elektrofahrzeugs ist es notwendig, dass bei der Rückspeisung die Netzfrequenz eingehalten wird. Aus diesem Grunde wird vorgeschlagen, dass der Prozessor zumindest ein Synchronisierungssignal für das mit der Induktionsspule gekoppelte Elektrofahrzeug zur Synchronisierung der Eingangsspannung an der Induktionsspule mit einer Netzfrequenz am Netzanschlusspunkt erzeugt. Der Prozessor ermittelt dazu zunächst die Netzfrequenz und die Nulldurchgänge, so dass der Prozessor Kenntnis über den elektrischen Zustands des elektrischen Energieversorgungsnetzes hat. Hierzu kann er beispielsweise auch Einrichtungen des Messzählers nutzen. Entsprechend der Informationen zu der Netzfrequenz kann vorteilhafterweise ein Synchronisierungssignal erzeugt werden, welches vorzugsweise drahtlos an das Elektrofahrzeug übermittelt wird. Hierdurch ist es möglich, in dem Elektrofahrzeug eine Induktionsspannung synchron mit der Netzfrequenz zu erzeugen, so dass in der mit dem Elektrofahrzeug gekoppelten Induktionsspule der elektrische Strom synchron mit dem elektrischen Energieversorgungsnetzes ist und eine Anpassung innerhalb der Ladestation nicht mehr erforderlich ist. Es sei erwähnt, dass das Synchronisierungssignal nur ein Ausführungsbeispiel darstellt und ebenso andere hier beschriebene Aspekte unabhängig hiervon erfinderisch sein können.

Gemäß einem Ausführungsbeispiel wird vorgeschlagen, dass der Prozess eingerichtet ist, einen Messwert des Zählers mit einem von dem Elektrofahrzeug empfangenen Messwert zu vergleichen. Insbesondere kann ein Messwert Strom, Spannung und/oder Frequenz umfassen. Vorzugsweise ist ein Messwert auch eine Kombination aus zumindest zwei einzelnen Messwerten, beispielsweise die elektrische Leistung oder die elektrische Energie. Bei der Rückspeisung ist es notwendig, dass die zurückgespeiste elektrische Energie dem Halter des Elektrofahrzeugs erstattet wird. Bei der Übertragung mittels Induktion ist die Verlustleistung jedoch beachtlich. Aus diesem Grunde ist die am Netzanschlusspunkt eingespeiste elektrische Energie geringer, als die aus dem elektrischen Energiespeicher des Elektrofahrzeugs entnommene elektrische Energie. Zu Abrechnungszwecken ist es jedoch notwendig, zunächst die von dem Energiespeicher des Elektrofahrzeugs entnommene elektrische Energie zu bestimmen. Hierzu ist es notwendig, dass in dem Elektrofahrzeug ein Messzähler eingerichtet ist, der unmittelbar erfasst, welche elektrische Energie von dem Energiespeicher des Elektrofahrzeugs an die Induktionsspule des Elektrofahrzeugs abgegeben wurde. Die Verlustleistung kann jedoch nicht zu Lasten des Energielieferanten gehen, so dass auch die Verlustleistung auf der Übertragungsstrecke berücksichtigt werden muss. Daher muss auch an der Ladestation die in den Netzanschlusspunkt eingespeiste elektrische Energie erfasst werden. Zwischen den beiden erfassten Werten, einerseits in dem Fahrzeug und andererseits in der Ladestation, besteht eine Differenz, die auf die elektrische Verlustleistung auf dem Weg zwischen dem Energiespeicher des Elektrofahrzeugs und dem Messzähler in der Ladestation zurück zu führen ist. Diese Verlustleistung wird durch einen Vergleich der Messwerte der beiden Messzähler.
Auch kann es vorkommen, dass die elektrische Kopplung zwischen dem Elektrofahrzeug bzw. dessen Induktionsspule und der Ladestation bzw. deren Induktionsspule beispielsweise durch schlechte Positionierung zueinander ungünstig ist. Wird in dem Elektrofahrzeug dann ein Rückspeisevorgang angestoßen, so kann es dazu kommen, dass die Energie aus dem Energiespeicher entnommen wird, jedoch nicht über die Induktionsspule der Ladestation in ausreichendem Maße oder überhaupt nicht aufgenommen wird. Dies würde zu erheblichen Verlustleistungen innerhalb des Elektrofahrzeugs und gar zu Beschädigungen der Elektronik oder der Spule innerhalb des Elektrofahrzeugs führen. Es ist daher darauf zu achten, dass bei einem Rückspeisevorgang eine ausreichend gute induktive Kopplung zwischen den beiden Induktionsspulen herrscht. Um dies zu gewährleisten, kann mit Hilfe der erfassten Messwerte festgestellt werden, ob eine ausreichende elektromagnetische Kopplung zwischen der Spule des Elektrofahrzeugs und der Induktionsspule besteht. Hierzu kann beispielsweise ein Vergleich der elektrischen Leistungen in dem Elektrofahrzeug und in der Ladestation erfolgen. Wenn die beiden Messwerte über einen Grenzwert voneinander abweichen, kann dies darauf hinweisen, dass die elektromagnetische Kopplung unzureichend oder überhaupt nicht vorhanden ist. Dann könnte beispielsweise ein Rückspeisevorgang in dem Elektrofahrzeug unterbrochen werden. Mit Hilfe des empfangenen Messwertes von dem Elektrofahrzeug kann somit in der Ladestation festgestellt werden, ob die Rückspeisung von elektrischer Energie erfolgreich ist oder nicht. Gegebenenfalls kann von der Ladestation ein Signal, vorzugsweise drahtlos an das Elektrofahrzeug übermittelt werden, um zu signalisieren, dass die induktive Kopplung nicht ausreichend ist, um einen Rückspeisevorgang weiterzuführen. Daraufhin kann dieser Vorgang unterbrochen werden.

Gemäß einem Ausführungsbeispiel wird vorgeschlagen, dass ein AC/AC Wandler zur Wandlung der an der Induktionsspule abgegriffenen Spannung in eine Spannung des Netzanschlusspunktes eingerichtet ist. Die Ausgangsspannung an der Induktionsspule ist abhängig von dem Wicklungsverhältnis zwischen der Induktionsspule und der Spule in dem Elektrofahrzeug einerseits, als auch der Spannung an der Spule in dem Elektrofahrzeug andererseits. In der Regel wird die Spannung auf Seiten des Elektrofahrzeugs 360 V betragen, da dies derzeit ein gängiges Spannungsmaß für Elektrofahrzeuge ist. Die Spannung kann jedoch auch davon abweichen, abhängig von der Ausgestaltung des Energiespeichers innerhalb des Elektrofahrzeugs. Sind die Wicklungen an der Induktionsspule und der Spule des Elektrofahrzeugs nicht entsprechend ausgelegt, so liegt an der Induktionsspule nicht die Netzspannung an, die notwendig ist, um die elektrische Energie in das elektrische Energieversorgungsnetz einzuspeisen. Um dies zu ermöglichen, wird mittels eines AC/AC Wandlers die abgegriffene Spannung in eine Spannung des Netzanschlusspunktes gewandelt. Vorzugsweise ist bei der Rückspeisung die Spannung am Netzanschlusspunkt größer 360 V, insbesondere 370 V.

Wird keine Synchronisierung der Eingangsspannung an der Induktionsspule mit der Netzfrequenz am Netzanschlusspunkt erzeugt, insbesondere wenn das Synchronisierungssignal entfällt, kann auch eigenständig erfinderisch sein, dass der AC/AC Wandler zur Wandlung der an der Induktionsspule anliegenden Frequenz in eine Frequenz des Netzanschlusspunktes eingerichtet ist. In diesem Fall kann das Synchronisierungssignal von dem AC/AC Wandler alternativ oder kumulativ zu der Elektronik in dem Elektrofahrzeug genutzt werden.

Gemäß einem Ausführungsbeispiel wird vorgeschlagen, dass die Wicklungszahl der Induktionsspule derart ist, dass an der Induktionsspule eine von der Ausgangsspannung des Elektrofahrzeugs transformiert Spannung abgreifbar ist. Insbesondere kann die Wicklungszahl der Spule in der Ladestation von der Wicklungszahl der Spule in dem Elektrofahrzeug abweichen, vorzugsweise um mehr als 1% und insbesondere weniger als 10%. Gemäß einem Ausführungsbeispiel kann das Verhältnis zwischen den Wicklungszahlen zwischen 4:3,8 und 4:3,4 sein.

Die Spannung kann dabei herauf- oder herabtransformiert werden, abhängig davon, ob seitens der Spule der Ladestation mehr oder weniger Wicklungen vorhanden sind, als in der Spule des Elektrofahrzeugs.

Gemäß einem Ausführungsbeispiel wird vorgeschlagen, dass neben der Induktionsspule eine zweite Spule mit einer von der Induktionsspule verschiedenen Wicklungszahl vorgesehen ist und dass die Induktionsspule zur Aufnahme elektrischer Leistung von dem Elektrofahrzeug eingerichtet ist und dass die zweite Spule zur Abgabe elektrischer Leistung an das Elektrofahrzeug eingerichtet ist. Aufgrund der unterschiedlichen Spannungen, die notwendig sind, wenn elektrische Energie aus dem Energieversorgungsnetz entnommen wird oder elektrische Energie in das Energieversorgungsnetz eingespeist wird, kann es notwendig sein, auch unterschiedliche Induktionsspulen zur Einspeisung bzw. Rückspeisung zu verwenden. Bei der Rückspeisung sollte das Spannungsniveau oberhalb der Spannung des elektrischen Energieversorgungsnetzes sein, um ein Rückspeisen zu ermöglichen. Bei der Einspeisung aus dem Energieversorgungsnetz in den Energiespeicher des Elektrofahrzeugs liegt in der Regel die Spannung des Energieversorgungsnetzes an. Auf Seiten des Energiespeichers ist es jedoch notwendig, eine definierte Gleichspannung an dem Energiespeicher anzulegen. Um diese möglichst einfach in dem Elektrofahrzeug zu erzeugen, kann es sinnvoll sein, eine zweite Spule neben der Induktionsspule vorzusehen, die zur Einspeisung von elektrischer Energie aus dem Energieversorgungsnetz in das Elektrofahrzeug genutzt wird, wohingegen die Induktionsspule ausschließlich für die Rückspeisung genutzt wird. Zur Erreichung von unterschiedlichen Spannungsniveaus sind daher die unterschiedlichen Wicklungszahlen der beiden Spulen sinnvoll.

Gemäß einem Ausführungsbeispiel wird vorgeschlagen, dass die Induktionsspule und die zweite Spule in einem Gehäuse gekapselt sind und über eine Zuleitung mit dem Messzähler verbunden sind. Somit kann einem gemeinsamen Gehäuse die Rückspeisung als auch die Einspeisung mittels der beiden Spulen realisiert werden.

Ein weiterer Aspekt ist ein Elektrofahrzeug mit einem Energiespeicher. Ein Energiespeicher ist vorzugsweise eine Reihen- und Parallelschaltung von Batteriezellen, die vorzugsweise so verschaltet sind, dass in dem Elektrofahrzeug eine Gleichspannung von 400 V anliegt. Über einen Wechselrichter kann eine Induktionsspule mit dem Energiespeicher verbunden sein, die zur induktiven Kupplung mit einer Induktionsspule einer Ladestation eingerichtet ist. Schließlich ist seitens des Elektrofahrzeugs ein Messzähler vorgesehen, der einen elektrischen Leistungsfluss von dem Energiespeicher zu der Induktionsspule erfassen kann. Der Messzähler kann entsprechend dem Messzähler der Ladestation aufgebaut sein und elektrische Größen wie Spannung, Strom, Frequenz, Phasenlage und/oder dergleichen erfassen. Der Messzähler ist dabei vorzugsweise im Wechselstromkreis des Elektrofahrzeugs, also zwischen dem Umrichter und der Induktionsspule angeordnet. Dies ist insbesondere von Bedeutung, da in einem Wechselstromnetz der Leistungsfluss leichter gemessen werden kann, als in einem Gleichstromnetz.

Zur netzsynchronen Rückspeisung wird vorgeschlagen, dass zwischen dem Energiespeicher und der Induktionsspule ein Umrichter angeordnet ist, der eine Ausgangsspannung in Abhängigkeit von einem von einer Ladestation empfangenen Synchronisierungssignal erzeugt. Insbesondere ist die Frequenz der Ausgangsspannung abhängig von dem Synchronisierungssignal. Es ist jedoch auch möglich, dass der Betrag der Ausgangsspannung abhängig von dem Synchronisierungssignal sein kann, insbesondere um die Ausgangsspannung an der Induktionsspule der Ladestation entsprechend dem Spannungsniveau des elektrischen Energieversorgungsnetzes anpassen zu können.

Wie bereits erläutert, ist der Messzähler vorzugsweise zwischen dem Umrichter und der Induktionsspule angeordnet.

Gemäß einem Ausführungsbeispiel wird vorgeschlagen, dass der Umrichter einen DC/AC Wandler umfasst. Vorzugsweise kann der DC/AC Wandler derart sein, dass ausgangsseitig eine Spannung zwischen 400 und 370 V AC bei einer Frequenz zwischen 48 und 51 Hz anliegt.

Auch kann es sinnvoll sein, dass der Umrichter einen AC/DC Wandler umfasst. Eingehend von der Induktionsspule kann beispielsweise bei Einspeisung von elektrischer Energie in den Energiespeicher eine Wechselspannung anliegen, die in eine Gleichspannung für den Energiespeicher gewandelt werden muss. In diesem Fall kann er AC/DC Wandler derart sein, dass er eine Eingangsspannung zwischen 340 und 380 V empfängt und eine Ausgangspannung zwischen 380V und 400 V DC erzeugt.

Wie bereits erläutert, ist der Umrichter zum Umrichten sowohl einer Eingangswechselspannung von der Induktionsspule in eine Gleichspannung für den Energiespeicher eingerichtet, als auch einer Gleichspannung von dem Energiespeicher in eine Ausgangswechselspannung für die Induktionsspule eingerichtet. Dabei ist vorzugsweise die Eingangswechselspannung kleiner als die Ausgangswechselspannung, wobei die Gleichspannung an dem Energiespeicher stets gleich ist. Somit hat der DC/AC Wandler ein anderes Wandlungsverhältnis als der AC/DC Wandler innerhalb des Umrichters.

Ein weiterer Aspekt ist ein System mit einer zuvor beschriebenen Ladestation sowie einem zuvor beschriebenen Elektrofahrzeug.

Nachfolgend wird der Gegenstand anhand einer Ausführungsbeispiele zeigenden Zeichnung näher erläutert. In der Zeichnung zeigen:
- Fig. 1: eine gegenständliche Ladestation;
- Fig. 2: ein gegenständliches Elektrofahrzeug.

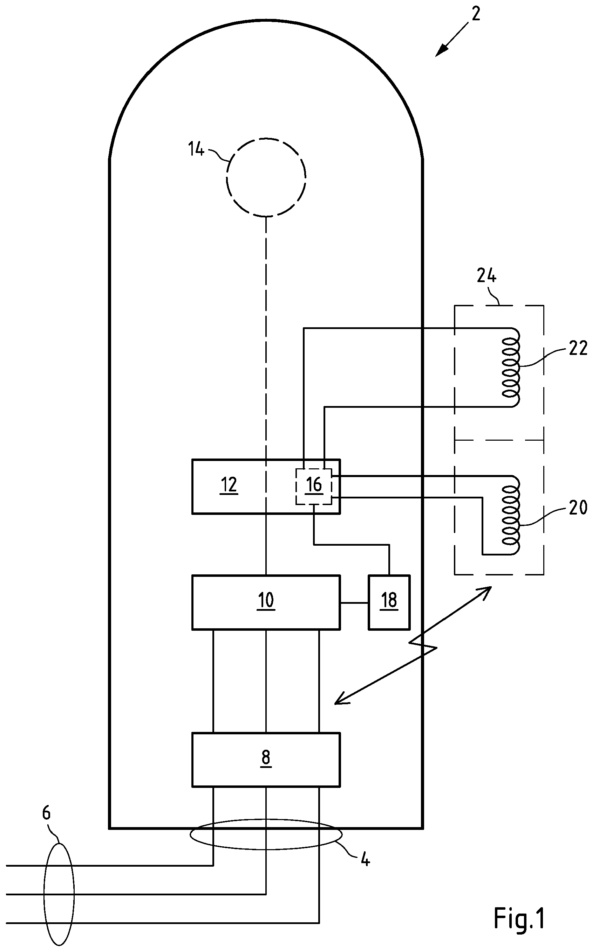

Fig. 1 zeigt eine Ladestation 2 mit einem Netzanschlusspunkt 4 für ein elektrisches Energieversorgungsnetz 6. Gezeigt ist ein dreiphasiges elektrisches Energieversorgungsnetz 6, wobei jedoch auch jede andere Konfiguration sinnvoll ist. Nachfolgend sind nicht stets immer drei Phasen gezeigt oder benötigt, so dass die nachfolgende Beschreibung für jede einzelne Phase eines Mehrphasenenergieversorgungsnetzes 6 gültig sein kann.

Die Ladestation 2 hat am Netzanschlusspunkt 4 eine Abschalteinrichtung 8, beispielsweise in Form eines Schützes, an jeder einzelnen Phase. Ein solcher Lasttrennschalter ermöglicht es, die Ladestation 2 auch unter Last vom elektrischen Energieversorgungsnetz 6 zu trennen. Ausgehend von der Abschalteinrichtung 8 ist ein Messzähler 10 in der Ladestation 2 angeordnet. Der Messzähler 10 erfasst insbesondere die Spannung, den Strom und/oder den Phasenwinkel vorzugsweise auf jeder einzelnen Phase. Außerdem kann der Messzähler 10 einen Frequenzgang des elektrischen Energieversorgungsnetzes 6 erfassen.

Über eine Ladeelektronik 12, in der ein Prozessor angeordnet sein kann, kann der Messzähler 10 beispielsweise mit einem stationären Ladepunkt 14 verbunden sein. Dieser Ladepunkt 14 ermöglicht beispielsweise ein Laden eines Elektrofahrzeugs über eine elektrische Leitung. Dieser Ladepunkt 14 ist optional.

Im Bereich der Ladeelektronik 12 kann ein Wandler 16 angeordnet sein. Der Wandler 16 ist vorzugsweise ein AC/AC Wandler, eingerichtet zur Wandlung einer Eingangsspannung in eine Ausgangsspannung als auch vorzugsweise zur Frequenzstellung. Schließlich ist die Ladeelektronik 12 als auch der Zähler 10 mit einer Kommunikationseinrichtung 18 verbunden.

Ausgehend von dem Wandler 1, kann eine erste Induktionsspule 20 vorgesehen sein. Die Induktionsspule 20 ist dazu eingerichtet, mit einer nachfolgend gezeigten Induktionsspule eines Elektrofahrzeugs gekoppelt zu werden. Die Induktionsspule 20 kann einerseits exklusiv für die Rückspeisung von elektrischer Energie in das Energieversorgungsnetz 6 genutzt werden, andererseits ist es jedoch auch denkbar, dass die Induktionsspule 20 auch für das Speisen des Elektrofahrzeugs aus dem Energieversorgungsnetz 6 eingerichtet ist.

Im erstgenannten Fall, bei einer exklusiven Nutzung der Induktionsspule 20 für die Rückspeisung, kann eine weitere Spule 22 vorgesehen sein, die ebenfalls über den Wandler 16 mit dem elektrischen Energieversorgungsnetz 6 verbunden sein kann. Die Spule 22 kann beispielsweise zur Speisung eines Energiespeichers eines nachfolgend gezeigten Elektrofahrzeugs eingesetzt werden. Induktionsspule 20 und Spule 22 können in einem gemeinsamen Gehäuse 24 gekapselt sein.

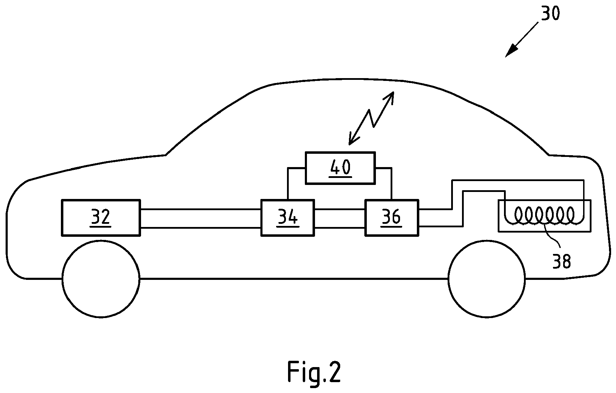

Fig. 2 zeigt ein Elektrofahrzeug 30, dessen Antrieb zumindest in Teilen über einen Energiespeicher 32 gespeist ist. Der Energiespeicher 32 ist über einen Wandler 34 mit einem Messzähler 36 verbunden. Der Messzähler 36 erfasst vorzugsweise Strom, Spannung sowie Frequenz und/oder Phasenlage zwischen Strom und Spannung. Der Messzähler 36 ist mit einer Spule 38 verbunden. Ferner sind Messzähler 36 als auch Wandler 34 mit einer Kommunikationseinrichtung 40 verbunden.

Die Ladestation 2 arbeitet mit dem Elektrofahrzeug 30 im Falle einer Rückspeisung von elektrischer Energie aus dem Energiespeicher 32 in das Energieversorgungsnetz 6 wie folgt.

Zunächst wird das Elektrofahrzeug 30 derart in die Nähe der Ladestation 2 bewegt, dass eine induktive Kopplung zwischen der Spule 38 und der Induktionsspule 20 gewährleistet sein sollte. Anschließend erfolgt über ein Aktivierungssignal zunächst eine Aktivierung des Wandlers 34 zur DC/AC Wandlung der Gleichspannung aus der dem Energiespeicher 32 in eine Wechselspannung. Diese Wechselspannung fließt über den Messzähler 36 zu der Spule 38 und induziert dort ein Magnetfeld.

Dieses Magnetfeld sollte in der Ladestation 2 in der Induktionsspule 20 eine Ausgangsspannung induzieren. Dies wird über den Messzähler 10 detektiert. Die Messzähler 10 und 36 tauschen über die Kommunikationseinrichtungen 18 und 40 ihren jeweiligen Messwerte aus. Vorzugsweise in der Ladeelektronik 12 werden die Messwerte der beiden Messzähler 10 und 36 ausgewertet. Wird von dem Messzähler 36 ein Leistungsfluss gemeldet und stellt der Messzähler 10 fest, dass ein empfangener Leistungsfluss unter einen unteren Grenzwert ist oder über einen bestimmten Betrag von dem Leistungsfluss in dem Zähler 36 liegt, so kann darauf geschlossen werden, dass die Spule 38 nicht ausreichend mit der Spule 20 induktiv gekoppelt ist. In diesem Fall wird über die Kommunikationseinrichtung 18 ein Abschaltsignal an die Kommunikationseinrichtung 40 übermittelt und die Rückspeisung wird fahrzeugseitig unterbrochen.

Anderenfalls, wenn die gemessenen Messwerte der Messzähler 36 und 10 derart gleich sind, dass deren Differenz einen unteren Grenzwert unterschreitet, so kann darauf geschlossen werden, dass eine ausreichende induktive Kopplung zwischen der Spule 38 und der Induktionsspule 20 besteht. In diesem Fall wird von dem Messwert des Messzählers 36 der Messwert des Messzählers 10 abgezogen, woraus sich die Verlustleistung auf der Strecke zwischen dem Messzähler 36 und dem Messzähler 10 ergibt. Somit kann festgestellt werden, welche Energie von dem Energiespeicher 32 tatsächlich in dem Messzähler 10 empfangen wurde und mithin in das Energieversorgungsnetz 6 eingespeist wurde.

Vor dem Beginn eines Rückspeisevorgangs kann in dem Messzähler 10 der Frequenzgang der Phasen an dem elektrischen Energieversorgungsnetz 6 ermittelt werden. Ein entsprechendes Synchronisierungssignal wird von dem Messzähler 10 gegebenenfalls über die Ladeelektronik 12 an die Kommunikationseinrichtung 18 übermittelt und von dort an die Kommunikationseinrichtung 40 ausgesendet.

Die Kommunikationseinrichtung 40 steuert im Anschluss den Wandler 34 derart, dass die DC/AC Wandlung des Wandlers 34 synchron mit der Netzfrequenz verläuft. Die dann an der Induktionsspule 20 abgreifbare Wechselspannung ist in diesem Fall synchron mit der Netzfrequenz und muss nicht mehr über den Wandler 16 in ihrer Frequenz umgesetzt werden. Der Wandler 16 kann dazu dienen, dass Spannungsniveau zu verändern, um ein Einspeisen von elektrischer Leistung in das Energieversorgungsnetz 6 zu ermöglichen. Insbesondere kann der Wandler 16 dazu genutzt werden, ein Spannungsniveau anzuheben, so dass ein Einspeisen in das elektrische Energieversorgungsnetz 6 möglich ist. Hierzu kann die Spannung über die Netzspannung des elektrischen Energieversorgungsnetzes 6 angehoben werden, beispielsweise um einen Betrag von mehr als 1%, vorzugsweise jedoch weniger als 5%.

Um die Ausgangsspannung an der Induktionsspule 20 korrekt einstellen zu können, wird auch vorgeschlagen, dass das Wicklungsverhältnis zwischen der Wicklung der Induktionsspule 20 und der Wicklung der Spule 38 derart eingestellt ist, dass eine Transformation erfolgt. Die Spannung am Energiespeicher 32 und mithin die Wechselspannung am Ausgang des Wandlers 34 kann beispielsweise 400 V AC betragen. Die Ausgangsspannung an der Induktionsspule 20 soll beispielsweise 370 V betragen. In diesem Fall ist das Wicklungsverhältnis zwischen der Spule 38 und der Induktionsspule 20 4:3,7. Dies bewirkt ein Herabtransformieren der Spannung am Messzähler 36 in eine niedrigere Spannung am Messzähler 10.

Für den Fall einer Einspeisung von elektrischer Energie aus dem Energieversorgungsnetz 6 in das Elektrofahrzeug 30 kann die Spule 22 genutzt werden. Die Spule 22 wird über den Wandler 16 mit elektrischer Wechselspannung beaufschlagt und in der Spule 38 oder einer hiervon getrennten, nicht gezeigten Spule kann eine Wechselspannung, die aus dem generierten Magnetfeld induziert wird, abgegriffen werden. Auch hier kann wieder eine Transformation derart erfolgen, dass eine eingangsseitige Spannung von beispielsweise 360 V AC in eine ausgangsseitige Spannung an dem Messzähler 36 von 400 V AC gewandelt wird. Dann ist in dem Wandler 34 lediglich eine AC/DC Wandlung notwendig.

Mit Hilfe des gezeigten Systems ist es in besonders einfacher Weise möglich, eine netzverträgliche Rückspeisung von elektrischer Energie aus einem Energiespeicher eines Elektrofahrzeugs 30 in ein Energieversorgungsnetz zu gewährleisten.

### Bezugszeichenliste

- 2: Ladestation
- 4: Netzanschlusspunkt
- 6: elektrisches Energieversorgungsnetz
- 8: Abschalteinrichtung
- 10: Messzähler
- 12: Ladeelektronik
- 14: Stationärer Ladepunkt
- 16: Wandler
- 18: Kommunikationseinrichtung
- 20: Induktionsspule
- 22: Spule
- 24: Gehäuse
- 30: Elektrofahrzeug
- 32: Energiespeicher
- 34: Wandler
- 36: Messzähler
- 38: Spule
- 40: Kommunikationseinrichtung

## Patentansprüche

1. Ladestation für Elektrofahrzeuge mit
- einer Induktionsspule (20) eingerichtet zur induktiven Kopplung mit einer Induktionsspule (38) eines Elektrofahrzeugs (30),
- einem Netzanschlusspunkt (4) eingerichtet zum Anschluss an ein elektrisches Energieversorgungsnetz (6),
- einem Messzähler (10) eingerichtet zum Erfassen eines elektrischen Leistungsflusses von der Induktionsspule (20) zum Netzanschlusspunkt (4), und
- einem Prozessor (12),
**dadurch gekennzeichnet,**
- **dass** der Prozessor (12) bei einer induktiven Rückspeisung aus einem Energiespeicher (32) eines Elektrofahrzeugs (30) zumindest ein Synchronisierungssignal für das mit der Induktionsspule (20) gekoppelte Elektrofahrzeug (30) zur Synchronisierung der Eingangsspannung an der Induktionsspule (20) mit einer Netzfrequenz am Netzanschlusspunkt (4) erzeugt, wobei der Prozessor (12) zur Erzeugung des Synchronisierungssignals die Netzfrequenz und Nulldurchgänge ermittelt.

2. Ladestation nach Anspruch 1,
**dadurch gekennzeichnet,**
- **dass** der Prozessor (12) eingerichtet ist, einen Messwert des Messzählers (10) mit einem von dem Elektrofahrzeug (30) empfangenen Messwert zu vergleichen, insbesondere zur Erfassung einer elektrischen Verlustleistung zwischen dem Energiespeicher (32) und dem Messzähler (10) und/oder zur Erfassung einer elektromagnetischen Kopplung zwischen der Induktionsspule (38) des Elektrofahrzeugs und der Induktionsspule (20).

3. Ladestation nach Anspruch 1 oder 2,
**dadurch gekennzeichnet,**
- **dass** ein AC/AC Wandler (16) zur Wandlung der an der Induktionsspule (20) abgegriffenen Spannung in eine Spannung des Netzanschlusspunktes (4) eingerichtet ist und/oder dass der AC/AC Wandler (16) zur Wandlung der an der Induktionsspule (20) anliegenden Frequenz in eine Frequenz des Netzanschlusspunktes (4) eingerichtet ist, wenn keine Synchronisierung der Eingangsspannung an der Induktionsspule (20) mit der Netzfrequenz am Netzanschlusspunkt (4) erzeugt wird.

4. Ladestation nach einem der vorangehenden Ansprüche,
**dadurch gekennzeichnet,**
- **dass** die Wicklungsanzahl der Induktionsspule (20) derart ist, dass an der Induktionsspule (20) eine von der Ausgangspannung des Elektrofahrzeugs (30) transformierte Spannung abgreifbar ist.

5. Ladestation nach einem der vorangehenden Ansprüche,
**dadurch gekennzeichnet,**
- **dass** neben der Induktionsspule (20) eine zweite Spule mit einer von der Induktionsspule (20) verschiedenen Wicklungszahl vorgesehen ist, und dass die Induktionsspule (20) zur Aufnahme elektrischer Leistung von dem Elektrofahrzeug eingerichtet ist und dass die zweite Spule zu Abgabe elektrischer Leistung an das Elektrofahrzeug (30) eingerichtet ist.

6. Ladestation nach einem der vorangehenden Ansprüche,
**dadurch gekennzeichnet,**
- **dass** die Induktionsspule (20) und die zweite Spule in einem gemeinsamen Gehäuse gekapselt sind und über eine Zuleitung mit dem Messzähler (10) verbunden sind.

7. Elektrofahrzeug mit
- einem Energiespeicher,
- eine Induktionsspule (38) eingerichtet zur induktiven Kopplung mit einer Induktionsspule (20) einer Ladestation (2),
- einem Messzähler (10) eingerichtet zur Erfassung eines elektrischen Leistungsflusses von dem Energiespeicher (32) zu der Induktionsspule (38), **dadurch gekennzeichnet,**
- **dass** zwischen dem Energiespeicher (32) und der Induktionsspule (38) ein Umrichter (34) angeordnet ist und eine Ausgangsspannung in Abhängigkeit von einem von einer Ladestation (2) empfangenen Synchronisierungssignal erzeugt, so dass eine Induktionsspannung an der Induktionsspule (38) synchron mit einer Netzfrequenz ist, wobei das Synchronisierungssignal basierend auf der Netzfrequenz und Nulldurchgängen ermittelt wurde.

8. Elektrofahrzeug nach Anspruch 7,
**dadurch gekennzeichnet,**
- **dass** der Messzähler (36) zwischen dem Umrichter (34) und der Induktionsspule (38) angeordnet ist.

9. Elektrofahrzeug nach Anspruch 7 oder 8,
**dadurch gekennzeichnet,**
- **dass** der Umrichter (34) einen DC/AC Wandler umfasst

10. Elektrofahrzeug nach einem der vorangehenden Ansprüche,
**dadurch gekennzeichnet,**
- **dass** der Umrichter (34) zum Umrichten sowohl einer Eingangswechselspannung von der Induktionsspule (38) in eine Gleichspannung für den Energiespeicher (32) eingerichtet ist, als auch zum Umrichten einer Gleichspannung von dem Energiespeicher (32) in eine Ausgangswechselspannung für die Induktionsspule (38) eingerichtet ist, insbesondere derart dass die Eingangswechselspannung kleiner ist, als die Ausgangswechselspannung.

11. System mit einer Ladestation nach einem der Ansprüche 1 bis 6 und einem Elektrofahrzeug nach einem der Ansprüche 7 bis 10.

## Claims

1. Charging station for electric vehicles with
- an induction coil (20) arranged for inductive coupling with an induction coil (38) of an electric vehicle (30),
- a grid connection point (4) arranged for connection to an electrical grid (6),
- a meter (10) arranged to obtain an electrical power flow from the induction coil (20) to the grids connection point (4), and
- a processor (12),
**characterized in that**
- the processor (12) generates during inductive feedback from the energy storage (32) of an electric vehicle (30) at least one synchronization signal for the electric vehicle (30) coupled to the induction coil (20) for synchronization of the input voltage at the induction coil (20) with a grid frequency at the grid connection point (4),
wherein the processor (12) determines the mains frequency and zero crossings in order to generate the synchronization signal.

2. Charging station according to claim 1,
**characterized in that**
- the processor (12) is arranged to compare a measured value of the meter (10) with a measured value received from the electric vehicle (30), in particular for obtaining an electrical power loss between the energy store (32) and the meter (10) and/or for detecting an electromagnetic coupling the induction between coil (38) of the electric vehicle and the induction coil (20).

3. Charging station according to claim 1 or 2,
**characterized in that**
- an AC/AC converter (16) is arranged to convert the voltage tapped at the induction coil (20) into a voltage of the grid connection point (4) and/or **in that** the AC/AC converter (16) is arranged to convert the frequency present at the induction coil (20) into a frequency of the grid connection point, in case no synchronization of the input voltage at the induction coil (20) with the mains frequency at the grid connection point is generated.

4. Charging station according to one of the preceding claims,
**characterized in that**
- the number of windings of the induction coil (20) is such that a voltage transformed from the output voltage of the electric vehicle (30) can be tapped off at the induction coil (20).

5. Charging station according to one of the preceding claims,
**characterized in that**
- in addition to the induction coil (20), a second coil with a different winding number than the induction coil (20) is provided, and **in that** the induction coil (20) is arranged to receive electrical power from the electric vehicle, and **in that** the second coil is arranged to output electrical power to the electric vehicle. (30)

6. Charging station according to one of the preceding claims,
**characterized in that**
- the induction coil (20) and the second coil are encapsulated in a common housing and are connected to the meter (10) via a supply line.

7. Electric vehicle with
- an energy storage (38),
- an induction coil (20) arranged for inductive coupling with an induction coil (20) of a charging station,
- a meter (10) arranged to meter an electrical power flow from the energy storage (32) to the induction coil (38),
**characterized in that**
- a converter (34) is arranged between the energy store (32) and the induction coil (38) and generates an output voltage as a function of a synchronization signal received from a charging station (2), such that an induced voltage at the induction coil (38) is synchronous with the mains frequency, wherein
the synchronization signal being determined based on the mains frequency and zero crossings.

8. Electric vehicle according to claim 7,
**characterized in that**
- the meter (36) is arranged between the inverter (34) and the induction coil (38).

9. Electric vehicle according to claim 7 or 8,
**characterized in that**
- the converter (34) comprises a DC/AC converter

10. Electric vehicle according to one of the preceding claims,
**characterized in that**
- the converter (34) is set up both for converting an AC input voltage from the induction coil (38) into a DC voltage for the energy store (32) and for converting a DC voltage from the energy store (32) into an AC output voltage for the induction coil (38), in particular in such a way that the AC input voltage is lower than the AC output voltage.

11. System comprising a charging station according to one of claims 1 to 6 and an electric vehicle according to one of claims 7 to 10.

## Revendications

1. Borne de recharge pour des véhicules électriques, ladite borne de recharge comprenant :
- une bobine d'induction (20) configurée pour le couplage inductif avec une bobine d'induction (38) d'un véhicule électrique (30),
- un point de raccordement au réseau (4) configuré pour le raccordement à un réseau d'alimentation en énergie électrique (6),
- un compteur de mesure (10) configuré pour la détection d'un flux de puissance électrique en circulation depuis la bobine d'induction (20) jusqu'au point de raccordement au réseau (4), et
- un processeur (12),
**caractérisée**
- **en ce que** le processeur (12), dans le cas d'une alimentation de retour inductive provenant d'un accumulateur d'énergie (32) d'un véhicule électrique (30), produit au moins un signal de synchronisation pour le véhicule électrique (30) couplé à la bobine d'induction (20), ledit signal de synchronisation servant à la synchronisation de la tension d'entrée au niveau de la bobine d'induction (20), avec une fréquence du réseau au niveau du point de raccordement au réseau (4), où le processeur (12) détermine, pour la production du signal de synchronisation, la fréquence du réseau et les points de passage à zéro.

2. Borne de recharge selon la revendication 1,
**caractérisée**
- **en ce que** le processeur (12) est configuré pour comparer une valeur mesurée du compteur de mesure (10), à une valeur mesurée ayant été reçue par le véhicule électrique (30), ledit processeur étant configuré en particulier pour la détection d'une dissipation de puissance électrique se produisant entre l'accumulateur d'énergie (32) et le compteur de mesure (10) et/ou pour la détection d'un couplage électromagnétique entre la bobine d'induction (38) du véhicule électrique et la bobine d'induction (20).

3. Borne de recharge selon la revendication 1 ou 2,
**caractérisée**
- **en ce qu'**un convertisseur de courant (16) CA / CA est configuré pour la conversion de la tension mesurée au niveau de la bobine d'induction (20), en une tension au niveau du point de raccordement au réseau (4), et/ou en ce que le convertisseur de courant (16) CA / CA est configuré pour la conversion de la fréquence s'appliquant à l'entrée de la bobine d'induction (20), en une fréquence du point de raccordement au réseau (4), quand il ne se produit aucune synchronisation de la tension d'entrée au niveau de la bobine d'induction (20), avec la fréquence du réseau au niveau du point de raccordement au réseau (4).

4. Borne de recharge selon l'une quelconque des revendications précédentes,
**caractérisée**
- **en ce que** le nombre de spires de la bobine d'induction (20) est tel, qu'une tension transformée à partir de la tension de sortie du véhicule électrique (30) peut être mesurée au niveau de la bobine d'induction (20).

5. Borne de recharge selon l'une quelconque des revendications précédentes,
**caractérisée**
- **en ce qu'**il est prévu, en plus de la bobine d'induction (20), une deuxième bobine ayant un nombre de spires différent de celui de la bobine d'induction (20), et en ce que la bobine d'induction (20) est configurée pour la réception de puissance électrique provenant du véhicule électrique et en ce que la deuxième bobine est configurée pour fournir de la puissance électrique au véhicule électrique (30).

6. Borne de recharge selon l'une quelconque des revendications précédentes,
**caractérisée**
- **en ce que** la bobine d'induction (20) et la deuxième bobine sont encapsulées dans un boîtier commun et sont reliées au compteur de mesure (10) par une conduite d'alimentation.

7. Véhicule électrique comprenant :
- un accumulateur d'énergie,
- une bobine d'induction (38) configurée pour le couplage inductif avec une bobine d'induction (20) d'une borne de recharge (2),
- un compteur de mesure (10) configuré pour la détection d'un flux de puissance électrique en circulation depuis l'accumulateur d'énergie (32) jusqu'à la bobine d'induction (38),
**caractérisé**
- **en ce qu'**un transformateur (34) est disposé entre l'accumulateur d'énergie (32) et la bobine d'induction (38) et produit une tension de sortie en fonction d'un signal de synchronisation ayant été reçu par une borne de recharge (2), de sorte qu'une tension d'induction au niveau de la bobine d'induction (38) est en synchronisation avec une fréquence de réseau, où le signal de synchronisation a été déterminé en se basant sur la fréquence de réseau et sur les points de passage à zéro.

8. Véhicule électrique selon la revendication 7, **caractérisé**
- **en ce que** le compteur de mesure (36) est disposé entre le transformateur (34) et la bobine d'induction (38).

9. Véhicule électrique selon la revendication 7 ou 8,
**caractérisé**
- **en ce que** le transformateur (34) comprend un convertisseur de courant CC / CA.

10. Véhicule électrique selon l'une quelconque des revendications précédentes,
**caractérisé**
- **en ce que** le transformateur (34) est configuré aussi bien pour transformer une tension alternative d'entrée de la bobine d'induction (38), en une tension continue pour l'accumulateur d'énergie (32), que pour transformer une tension continue de l'accumulateur d'énergie (32), en une tension alternative de sortie pour la bobine d'induction (38), en particulier de manière telle, que la tension alternative d'entrée soit inférieure à la tension alternative de sortie.

11. Système comprenant une borne de recharge selon l'une quelconque des revendications 1 à 6, et comprenant un véhicule électrique selon l'une quelconque des revendications 7 à 10.
